# EUROPÄISCHE PATENTSCHRIFT

(11) **EP 0 865 308 B1**
(45) Veröffentlichungstag und Bekanntmachung des Hinweises auf die Patenterteilung: **14.03.2001**
(21) Anmeldenummer: 96943031.3
(22) Anmeldetag: 04.12.1996
(51) Int. Cl.: B01D 63/08, B01D 25/26

(54) **VORRICHTUNG ZUM FILTERN UND TRENNEN VON STRÖMUNGSMEDIEN**
DEVICE FOR FILTERING AND SEPARATING FLOW MEDIA
DISPOSITIF POUR FILTRER ET SEPARER DES MILIEUX EN ECOULEMENT

(30) Priorität: 04.12.1995 DE 19544960
(43) Veröffentlichungstag der Anmeldung: 23.09.1998
(73) Patentinhaber: Wobben, Aloys, 26607 Aurich (DE)
(72) Erfinder: Wobben, Aloys, 26607 Aurich (DE)
(74) Vertreter: Fritsche, Rainer, Dipl.-Wirtsch.-Ing.
(86) Internationale Anmeldenummer: EP9605416
(87) Internationale Veröffentlichungsnummer: WO9720621

(56) Entgegenhaltungen:
- EP-A- 0 289 740
- EP-A- 0 396 853
- FR-A- 2 207 747
- SOVIET PATENT ABSTRACTS Section Ch, Week 9412 Derwent Publications Ltd., London, GB; Class J01, AN 94-098945 XP002027369 & SU 1 790 985 A (VLAD AUTOM MECH INST) , 30.Januar 1993

## Beschreibung

Die Erfindung betrifft eine Vorrichtung zum Filtern und Trennen von Strömungsmedien, insbesondere zur Meerwasserentsalzung und Wasserreinigung durch Umkehrosmose und Ultrafiltration gemäß dem Oberbegriff des Anspruchs 1.

In der Praxis werden derartige Vorrichtungen als Module bezeichnet. Hierbei sind Hohlfasermodule, Spiralwickelmodule und Plattenmodule bekannt geworden. Beispielsweise geht aus der DE-37 15 183 C2 ein Plattenmodul hervor, das der Vorrichtung der eingangs genannten Art entspricht. Der wesentliche Unterschied zwischen den einzelnen Modulen besteht in deren Aufbau, insbesondere in der Lage und der Bauart der Filtereinrichtung im Modul sowie der Fähigkeit ein Rohwasser mit einem Verschmutzungsgrad (Sold Density Index (SDI)) ohne die Gefahr der Verblockung zu filtern bzw. zu trennen. Bei den bekannten Plattenmodulen besteht dabei die geringste Gefahr einer Verblockung. Es kann also auf eine Vorreinigung mit Chemikaliendosierung verzichtet werden. Der SDI-Wert im Plattenmodul kann maximal bis 20 gehen. Nachteil des Plattenmoduls ist unter anderem die Einzelfertigung der Membranplatten und ein sehr hoher Verschnitt an Membranmaterial. Des weiteren weisen Plattenmodule durch eine Vielzahl an Umlenkungen höhere Druckverluste in ein kleineres Verhältnis von Filterelementfläche zu Modulvolumen gegenüber Hohlfaser- und Spiralwickelmodulen auf. Schließlich sind die Herstellungsverfahren für, insbesondere auch wegen des vorstehend erwähnten hohen Verschnitts an Filterelementmaterial, verhältnismäßig aufwendig, so daß auch die Herstellungskosten für derartige Plattenmodule hoch sind.

Dem gegenüber weisen die Hohlfaser- und Sprialwickelmodule ein großes Verhältnis von Filterelementfläche zu Modulvolumen auf und lassen sich kostengünstig herstellen. Jedoch ist für die Hohlfasermodule ein SDI-Wert von nur 1 - 3 und für Spiralwickelmodule von 3 - 5 möglich. Daher ist bei diesen Modulen eine Vorreinigung durch Chemikaliendosierung notwendig.

Aus der SU-A- 1 790 985 geht eine Vorrichtung zum Filtern und Trennen von Strömungsmedien hervor, bei der in einem Gehäuse ein flächiges Filterelement vorgesehen ist. Dieses Filterelement ist unter Ausbildung mehrerer Strömungskanäle für das zu filternde Strömungsmedium mäanderförmig in dem Gehäuse angeordnet. Die Strömungskanäle verlaufen hierbei geradlinig. Daher wird das Filterelement bei der bekannten Vorrichtung in den Umlenkbereichen seines Mäanderverlaufes nicht genutzt, so daß insgesamt große Teile dieses Filterelements nicht für den Filtriervorgang einsetzbar sind.

Es ist Aufgabe der vorliegenden Erfindung, eine Vorrichtung der eingangs genannten Art zu schaffen, die sich bei einem hohen Wirkungsgrad hinsichtlich der Trennund Filterleistung kostengünstig herstellen läßt.

Die vorstehende Aufgabe wird durch die Merkmale des Anspruchs 1 gelöst. Die vorgeschlagene Lösung ermöglicht, daß pro Vorrichtung bzw. Modul nur ein einziges flächiges Filterelement von Nöten ist. Hierdurch lassen sich ganz erheblich die Herstellungskosten für eine derartige Vorrichtung reduzieren, da die bei bekannten Vorrichtungen notwendigen Arbeiten, wie das Zuschneiden der einzelnen für ein Modul vorgesehenen Flächen Filterelementen und deren Anordnung in dem Gehäuse entfallen können. Des weiteren erfolgt eine effektivere Ausnutzung des Flächenelementes, da der Filter- bzw. Trennprozeß ununterbrochen entlang des Strömungsweges des zu handelnden Strömungsmediums erfolgen kann. Selbst in den Bereichen der Umlenkung des zu behandelnden Strömungsmediums kann eine Filterung bzw. Trennung erfolgen.

Die Anordnung des flächigen, mäanderförmig verlaufenden Filterelements kann so erfolgen, daß das zu behandelnde Strömungsmedium entlang des mäanderförmig angeordneten, flächigen Filterelementes sich nur auf einer Flächenseite des Elementes befindet, d. h., daß nur ein einziger Strömungskanal vorgesehen ist. Zur besseren Ausnutzung des flächigen, mäanderförmigen Filterelementes kann dieses jedoch auch so angeordnet werden, daß das zu behandelnde Strömungsmedium an beiden Seiten entlangströmt, d. h., daß zwei Strömungskanäle vorgesehen sind.

Die Ausrichtung des flächigen, mäanderförmig verlaufenden Filterelementes in dem Gehäuse kann frei gewählt werden. Insbesondere kann der Bereich der Umlenkung den jeweiligen Gegebenheiten angepaßt werden. Ein besonders einfacher Aufbau der Gesamtvorrichtung läßt sich dadurch erzielen, daß das mäanderförmig verlaufende, flächige Filterelement im wesentlichen senkrecht zur Längsachse des Gehäuses mit zumindest annähernd parallel zueinander verlaufenden Elementflächen in dem Gehäuse aufgenommen ist.

Zur besseren Stabilisierung der mäanderförmigen Anordnung des flächigen Filterelementes sowie zur Ausbildung des oder der Strömungkanäle können weiterhin aufeinander folgend mehrere zwischen sich einen Abstand ausbildende sowie im wesentlichen parallel zueinander verlaufende Trägerplatten vorgesehen sein. Diese Trägerplatten nehmen zwischen sich das flächige, mäanderförmig angeordnete Filterelement auf.

Damit die Umlenkung des mäanderförmig angeordneten, flächigen Filterelements gleichförmig erfolgen kann und dieses dabei gestützt wird, kann eine Trägerplatte an einer Endkante mit einer Umlenkeinrichtung für das mäanderförmig angeordnete, flächige Filterelement versehen sein. Hierbei kann die Umlenkeinrichtung so ausgebildet sein, daß sie einen gegenüber der Plattendicke großen Umlenkradius für das mäanderförmig angeordnete, flächige Filterelement definiert.

Die Umlenkeinrichtung kann beispielsweise durch wenigstens einen an der Endkante vorgesehenen, über die Plattenfläche überstehenden Umlenkkörper gebildet sein. Damit die Strömung des Strömungsmediums so wenig wie möglich gestört wird, kann weiterhin vorgesehen sein, daß entlang der Endkante mehrere, vorzugsweise mit gleichem Abstand angeordnete Umlenkkörper vorgesehen sind, die je nach Größe der Trägerplatte bzw. Länge der Endkante verhältnismäßig klein ausgebildet sein können.

Um das Permeat aus der Vorrichtung abführen zu können, ist weiterhin in der Mittel jeder Trägerplatte eine im wesentlichen senkrecht zur Plattenebene verlaufende, dem Permeat abflußdienende Durchbrechung vorgesehen. Um die Strömung des zu behandelnden Strömungsmedium durch die Durchbrechung so wenig wie möglich zu stören, kann weiterhin vorgesehen sein, daß die Durchbrechung einen, in der Plattenebene betrachtet elypsenförmigen Querschnitt aufweist.

Diese Durchbrechung kann gleichzeitig zur Anordnung einer Spanneinrichtung verwendet werden, die Packung aus dem mäanderförmig angeordneten, flächigen Filterelement sowie den gegebenenfalls vorhandenen Trägerplatten gegeneinander preßt. Diese Spanneinrichtung kann durch jeweils zwei Flanschelemente gebildet sein, die über einen Spannbolzen mit gegebenenfalls vorhandenem Gewinde sowie einer Mutter gegeneinander gespannt werden. Die Durchbrechung kann zur Aufnahme des Spannbolzens dienen, wobei ein Führungsring in der Durchbrechung vorgesehen sein kann, dessen Innendurchmesser der Elypse entlang der kürzeren Hauptachse annähernd entspricht.

Damit das zu behandelnde Strömungsmedium nicht auf seinem Weg durch den einen Strömungskanal zwischen Trägerplatte und einer Flächenseite des mäanderförmig angeordneten, flächigen Filterlements hineinströmen kann, kann weiterhin vorgesehen sein, daß die Durchbrechung zumindest an einer der beiden Flächenseiten der Trägerplatte einen über die Plattenebene dieser Trägerplatte überstehenden, die Durchbrechung vollständig umgebenden Rand versehen ist. Der Rand kann dabei so ausgestaltet sein, daß er durch das mäanderförmig angeordnete, flächige Filterelement hindurch geht und in Verbindung mit der nächsten folgenden Trägerplatte steht.

Die Durchbrechung kann dabei in der Trägerplatte so angeordnet sein, daß ihre längere Hauptachse annähernd parallel zu der Strömungsrichtung bzw. senkrecht zu der die Umlenkeinrichtung aufnehmenden Endkanten der Trägerplatte verläuft.

Damit das zu behandelnde Strömungsmedium nicht in die Durchbrechung einlaufen kann, kann weiterhin vorgesehen sein, daß die Durchbrechung mit einer um die Durchbrechung umlaufenden Nut zur Aufnahme eines Dichtelements, vorzugsweise eines O-Rings versehen ist.

Zur Erleichterung des Aufeinanderstapelns der Trägerplatten unter Ausbildung eines Abstandes zwischen ihnen kann weiterhin vorgesehen sein, daß die Endkante der Trägerplatte, die der die Umlenkeinrichtung aufweisende Endkante gegenüberliegt, eine Abstandseinrichtung aufweist, die über beide Flächenseiten der Trägerplatte übersteht. Die Abstandseinrichtung kann dabei durch einen über beide Flächenseiten überstehenden Steg gebildet sein. Die Abstandseinrichtung kann dabei durch einen über beide Flächenseiten überstehenden Steg gebildet sein.

Um die Montage der erfindungsgemäßen Vorrichtung zu erleichtern, kann weiterhin vorgesehen sein, daß ein an einer Flächenseite überstehender Abschnitt der Abstandseinrichtung wenigstens ein erstes Justierelement und der an der anderen Flächenseite überstehende Abschnitt der Abstandseinrichtung ein zweites Justierelement aufweist, welches so ausgebildet ist, daß eine Trägerplatte mit ihrem zweiten Justierelement an der übernächsten Trägerplatte an deren ersten Justierelement gegebenenfalls unter Zwischenschaltung eines Dichtelements justiert wird. Vorzugsweise weisen die Endkanten, die die Umlenkeinrichtung aufweisende Endkante mit der die Abstandseinrichtung aufweisende Endkante verbindenden Endkanten einer Trägerplatte einen über beide Flächenseiten der Trägerplatte überstehenden Rand auf, dessen Höhe geringer ist als der der Abstandseinrichtung.

Die Trägerplatten können dabei aufeinanderfolgend mit in der Plattenebene um 180 ° gedreht angeordneten Endkanten in dem Gehäuse aufgenommen sein, d.h., daß auf eine Endkante mit der Abstandseinrichtung einen Endkante mit der Umlenkeinrichtung folgt und so weiter.

Um den Strömungsabriß durch unterschiedliche Geschwindigkeiten des zu behandelnden Strömungsmediums zu verhindern, kann weiterhin vorgesehen sein, daß der Querschnitt eines Strömungskanals ab der Mitte der Durchbrechung stromabwärts der Durchbrechung konstant ist. Mit anderen Worten wird dafür Sorge getragen, daß der sich durch die Durchbrechung gegenüber der Eintrittsseite an einer Trägerplatte verengte Querschnitt des Strömungskanals in seiner Querschnittsausbildung konstant bleibt. Da sich nach der Durchbrechung die Breite des Kanals wieder erweitert, wird demzufolge gleichzeitig die Höhe verringert, so daß der Querschnitt konstant bleibt. Ebenso kann stromaufwärts der Durchbrechung eine Absenkung in der Trägerplatte vorgesehen sein, die stromabwärts der Mitte der Durchbrechung wieder auf das ursprüngliche Plattenebenenniveau angehoben wird, wodurch ebenfalls eine Konstanz des Strömungsquerschnitts erreicht wird.

Das Filterelement kann wiederum ganz unterschiedlich ausgebildet sein. Besonders vorteilhaft ist es, wenn das Filterelement ein Membrankissen ist, das vorzugsweise eine randverschweißte, doppelte Membran ist.

Vorzugsweise kann auch vorgesehen sein, daß die Trägerplatte an einer oder beiden Flächenseiten mit aus der Plattenebene jeweils hervorstehenden Turbulatoren versehen ist. Hierbei können die Turbulatoren in Spalten und Reihen angeordnet sein, wobei sie in aufeinander folgenden Spalten und Reihen jeweils versetzt zueinander angeordnet sind. Die Form der Turbulatoren kann hierbei beliebig gewählt werden, wobei eine besonders strömungsgünstige Form dadurch erreicht wird, daß die Turbulatoren elypsenförmig ausgebildet sind.

Für die Trägerplatte kann jede beliebige Form gewählt werden. Besonders vorteilhaft ist es, wenn die Trägerplatte rechteckförmig, insbesondere quadratisch ausgebildet ist. Weiterhin kann die Tragbreite der Trägerplatte der Bahnbreite eines flächigen Filterelementes angepaßt sein.

Zur Herstellung eines flächigen Filterelementes kann die Doppelmembran mit der Gesamtlänge für eine Vorrichtung in einem Arbeitsgang in einer Maschine verschweißt werden. Als zweiter Arbeitsgang erfolgt dann das Stanzen der Durchbrechung durch Eindringen eines der Durchbrechungsform angepaßten Rundstahles in die in der Maschine eingelegten und verschweißte Membran. Hierdurch kann einen besonders günstige Herstellung erreicht werden.

Weitere vorteilhafte Ausgestaltungen sowie ein Ausführungsbeispiel werden nachstehend anhand der Zeichnungen erläutert. Es zeigt:
- Fig. 1:: einen schematischen Längsschnitt durch eine erfindungsgemäße Vorrichtung;
- Fig. 2:: eine Ansicht von oben auf eine in Fig. 1 verwendete Trägerplatte;
- Fig. 3:: eine Ansicht der Trägerplatte entlang einer Linie A-A in Fig. 2;
- Fig. 4:: einen Schnitt durch die Trägerplatte entlang der Linie B-B in Fig. 2;
- Fig. 5:: eine Seitenansicht der Trägerplatte entlang der Linie C-C in Fig. 2;
- Fig. 6:: einen Schnitt durch die Trägerplatte entlang der Linie D-D in Fig. 2;
- Fig. 7:: einen Schnitt durch die Trägerplatte entlang der Linie E-E in Fig. 2;
- Fig. 8:: eine schematische Ansicht von oben einer weiteren Ausführungsform einer Trägerplatte;
- Fig. 9:: einen Schnitt entlang der Linie F-F in Fig. 8, und
- Fig. 10 - 10b:: verschiedene Ansichten auf die in Fig. 2 gezeigte Durchgangsdurchbrechung.

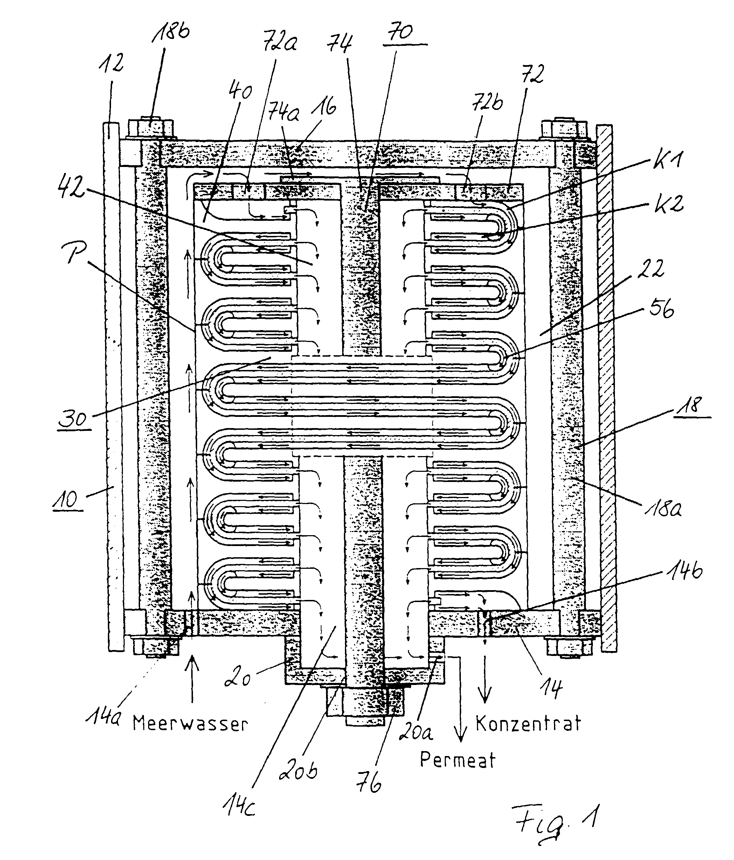

Die in Fig. 1 schematisch dargestellte Vorrichtung enthält ein Gehäuse 10, ein in dem Gehäuse mäanderförmig angeordnetes, flächiges Filterelement 30, mehrere das flächige Filterelement 30 unter Ausbildung von Strömungskanälen zwischen sich aufnehmende Trägerplatten 40 sowie eine Spanneinrichtung 70.

Das Gehäuse 10 ist aus einem an beiden Enden offenen Rohrstück 12 gebildet. Das Rohrstück 12 wird an seinem, in Fig. 1 unteren Ende durch einen ersten Endflansch 14 und an seinem in Fig. 1 oben vorgesehenen Ende durch einen weiteren Endflansch 16 verschlossen. Die beiden Endflansche 14, 16 sind druckdicht in das Rohrstück 12 eingesetzt und werden durch Spanneinrichtungen 18 gegeneinander verspannt. Die Spanneinrichtungen 18 sind mehrere entlang des Querschnitts des Rohrstücks 12 angeordnete Schraubenbolzen 18a gebildet, die die beiden Endflansche 14, 16 durchsetzen. An ihren Enden weisen die Spannbolzen 18a Gewinde auf, auf die von der Außenseite des Rohrstücks 12 jeweils Muttern 18b aufgeschraubt sind.

Der untere Endflansch 14 weist eine Zulaufdurchbrechung 14a für das zu behandelnde bzw. zu filternde Strömungsmedium - hier Meerwasser - auf. Weiterhin weist der untere Endflansch 14 eine Abflußdurchbrechung 14b für das durch die Filterung bzw. Umkehrosmose gewonnene Konzentrat auf. Darüber hinaus ist der untere Endflansch 14 in seiner Mitte mit einer größeren Durchbrechung 14c versehen, die zur Aufnahme und für den Abfluß des Permeats vorgesehen ist. Diese größere Durchbrechung 14c wird durch einen Abschlußgehäuse 20 verschlossen, welches wiederum eine Durchgangsöffnung 20a für das Permeat aufweist. Schließlich weist die Abdeckung 20 noch eine weitere Durchgangsöffnung 20b für die nachstehend noch näher erläuterte Spanneinrichtung 70 auf.

Das flächige, in dem Gehäuse 10 mäanderförmig angeordnete Filterelement 30 ist ein Membrankissen, welches durch eine doppelte, randverschweißte Membran gebildet ist. Das flächige Filterelement 30 wird im Inneren des Gehäuses 10 durch die Trägerplatten 40 in seiner mäanderförmigen Anordnung gehalten.

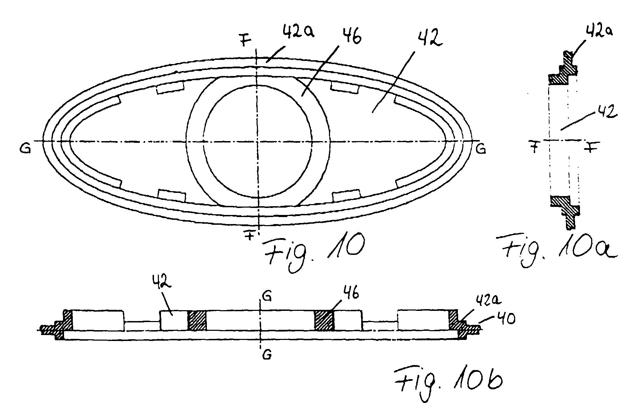

Wie aus den Fig. 2 bis 7 hervorgeht, weist eine Trägerplatte 40 eine rechteckförmige, insbesondere quadratische, Form auf. In der Mitte der Trägerplatte 40 ist eine im wesentlichen elyptische Durchgangsdurchbrechung 42 für den Abfluß des gewonnenen Permeats vorgesehen. Die Ausrichtung der längeren Hauptachse der Elypse der Durchgangsdurchbrechung 42 verläuft dabei im wesentlichen parallel zur Strömungsrichtung S des entlang der Trägerplatte 40 strömenden Strömungsmediums. Die Durchgangsdurchbrechung 42 weist einen Rand 42a auf, der aus der Plattenebene an einer Flächenseite der Trägerplatte 40 über die Plattenebene übersteht. Der Rand 42a läuft vollständig um die Durchgangsdurchbrechung 42 um (vgl. auch Fig. 10 bis 10b). Weiterhin ist der Rand 42a zur Aufnahme eines nicht weiter dargestellten Dichtelementes, vorzugsweise in Form eines O-Ringes vorgesehen, der das Einfließen des zu trennenden bzw. zu filternden Strömungsmediums in die Durchgangsdurchbrechung 42, die ja als Abfluß für das Permeat dient, verhindert.

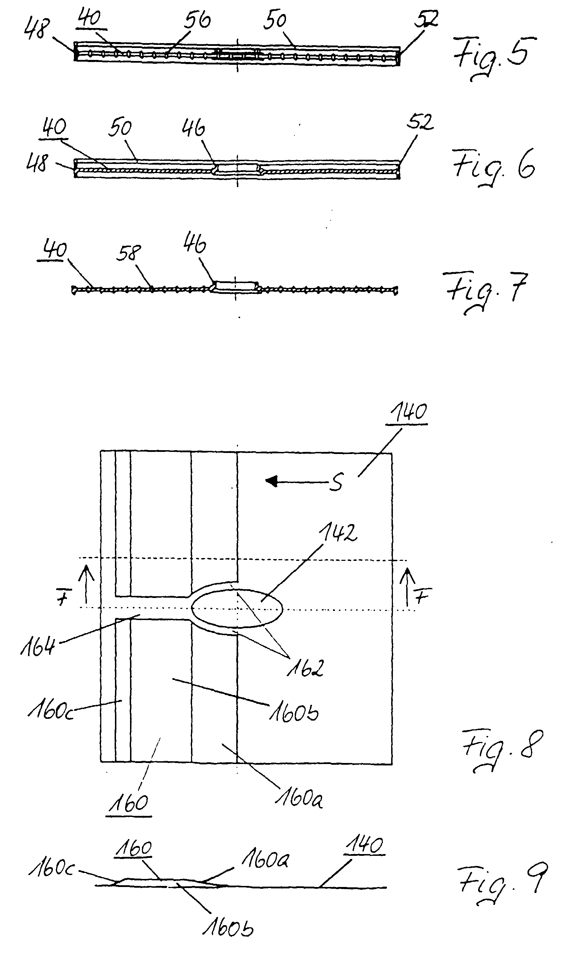

Wie insbesondere aus den Fig. 2 und 4 hervorgeht, ist die Durchgangsdurchbrechung 42 weiterhin mit einem Ring 46 versehen, dessen Innendurchmesser annähernd dem Durchmesser der elyptischen Durchbrechung 42 entlang ihrer kürzeren Hauptachse entspricht. Der Ring 46 dient zur Führung und Aufnahme der später im einzelnen noch erläuterten Spanneinrichtung 70.

Wie aus den Fig. 2 bis 7 weiterhin hervorgeht, ist die Trägerplatte 40 mit einem entlang von drei Endkanten bzw. Längskanten der Trägerplatte 40 verlaufenden Randsteg 48-52 versehen, der über die jeweilige Ebene einer Flächenseite im wesentlichen senkrecht zu dieser Ebene übersteht. Der im wesentlichen senkrecht zur Hauptachse der elyptischen Durchbrechung 42 bzw. quer zur Strömungrichtung S verlaufende Randsteg 50 weist gegenüber den beiden anderen Randstegen 48-52 sowie dem Rand 42a der elyptischen Durchgangsdurchbrechung 42 größere vertikale Höhe auf.

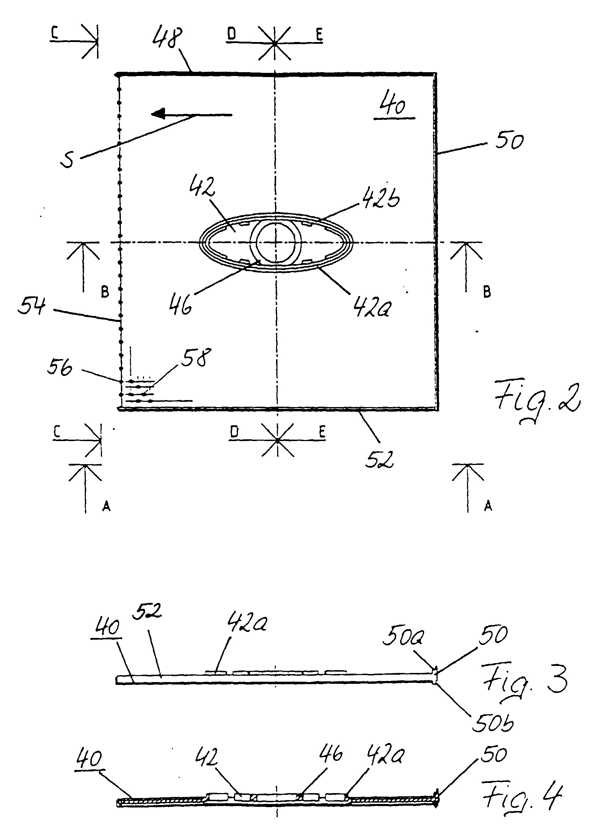

Wie aus den Fig. 3 bis 6 hervorgeht, ist der Randsteg 50 an seinem, bezogen auf Fig. 3 bis 6, oberen Ende L-förmig ausgestaltet und bildet damit ein erstes Justierelement 50a. Das andere, bezogen auf die Fig. 3 bis 6, untere Ende ist ebenfalls L-förmig ausgestaltet und bildet ein zweites Justierelement 50b. Die beiden Justierelemente 50a, 50b dienen später zum Ausrichten von aufeinander folgend angeordneten Trägerplatten 40, wobei das Justierelement 50b einer vorausgehenden Trägerplatte (40) in das Justierelement 50a der übernächsten Trägerplatte 40 eingreift, wie dies nachstehend noch näher erläutert wird.

Die stromabwärts der elyptischen Durchgangsdurchbrechung 42 vorhandene Randkante 54 der Trägerplatte 40 weist keinen Rand auf. Dafür sind an dieser Randkante 54 mehrere in gleichmäßigen Abständen zueinander angeordnete Umlenkeinrichtungen 56 vorgesehen, die aus beiden Ebenen der beiden Flächenseiten der Trägerplatte 40 hervorstehen. Hierdurch wird das Filterelement 30 mit einem gegenüber der Plattendicke großen Radius umgelenkt.

Wie aus Fig. 2 hervorgeht, sind an beiden Flächenseiten der Trägerplatte 40 in Reihen und Spalten angeordnete Turbulatoren 58 vorgesehen, wobei die Turbulatoren von einander folgenden Reihen oder Spalten versetzt von einenander angeordnet sind.

Wie aus Fig. 1 hervorgeht, sind die Trägerplatten 40 aufeinander folgend jeweils um 180° in der Plattenebene gedreht angeordnet. Hierbei greifen die Justiereinrichtungen 50a bzw. 50b der ersten und der dritte bzw. entsprechend folgenden Trägerplatte 40 ineinander. Hierbei kann zwischen den jeweiligen Justiereinrichtungen 50a bzw. 50b eine Dichtung vorgesehen sein, die ebenfalls an den Randstegen 48 bzw. 52 angeordnet sein kann. Wie aus Fig. 1 ebenfalls hervorgeht, überdecken sich zwei aufeinander folgende, jeweils um 180° gegeneinander verdreht Trägerplatten 40 nicht vollständig, so daß die den Randsteg 50 der einen Trägerplatte 40 aufweisende Endkante über die die Umlenkeinrichtungen 56 aufweisende Endkante 54 der nachfolgenden Trägerplatte 40 übersteht. Durch die Randstege 46 bzw. 48 wird hierdurch ein vollständig geschlossener Raum gebildet, wobei das zwischen zwei aufeinander folgenden Trägerplatten aufgenommene Filterelement 30 einen oberen und einen unteren Strömungskanal K1 bzw. K2 ausbildet. Mit anderen Worten ist ein Strömungskanal K1 zunächst durch die Unterseite einer vorausgehenden Trägerplatte und anschließend durch die Oberseite der nachfolgenden Trägerplatte sowie durchgehend durch das mäanderförmig angeordnete Filterelement 30 gebildet.

Die Spanneinrichtung 70 wird durch eine Endplatte 72 sowie eine die Endplatte 72 durchsetzenden Bolzen 74 gebildet. Der Bolzen 74 weist wiederum einen Spannflansch 74a auf, der gegen die Außenseite der Endplatte 72 anliegt. Der Spannbolzen 74 durchsetzt vollständig das Rohrstück 12 des Gehäuses 10 und tritt an der Abdeckung 20 aus dem Gehäuse 10 aus. An dieser Seite weist der Spannbolzen 74 ein Gewinde auf, auf das eine Mutter 76 aufgeschraubt werden kann. Hierdurch läßt sich die aus den aufeinander folgend, jeweils um 180 ° zueinander versetzt angeordneten Trägerplatten 40 sowie dem dazwischen aufgenommenen Filterelement 30 eine kompakte Packung P bilden. Die Endplatte 72 weist zwei Durchgangsöffnungen 72a bzw. 72b für den Zufluß des zu behandelnden Strömungsmediums auf. Wie aus Fig. 1 ebenfalls hervorgeht, ist aus den Trägerplatten 40 und dem Filterelement 30 gebildete Packung mit einem solchen Außendurchmesser versehen, daß sie kleiner als der Innendurchmesser des Rohrstücks 12 ist. Hierdurch wird entlang der Packung ein Strömungsweg 22 für das zu behandelnde Strömungsmedium gebildet.

Wie durch die Pfeile in Fig. 1 dargestellt ist, gelangt das zu behandelnde Strömungsmedium durch die Zuflußdurchgangsöffnung 14a in das Innere des Gehäuses 10 und fließt dort entlang der Packung zu dem gegenüberliegenden, durch den Endflansch 16 gebildete Ende des Gehäuses 10. Dort tritt das zu behandelnde Medium durch die Durchgangsöffnungen 72a bzw. 72b in das Innere der aus den Trägerplatten 40 und dem Filterelement 30 gebildeten Packung ein. Dabei gelangt es in die beiden Strömungskanäle K1 bzw. K2 sowie in das Innere des Filterelements 30. Das durch die Filtration bzw. Umkehrosmose gewonnene Permeat tritt aus dem Filterelement 30 über die elyptische Durchgangsdurchbrechung 42 in das Innere der Packung ein und fließt über den Auslaß 20a in der Abdeckung 20 nach außen ab. Das noch nicht weiter behandelte Strömungsmedium fließt ebenfalls mäanderförmig entlang der beiden Strömungskanäle K1 bzw. K2 vollständig durch die erfindungsgemäße Vorrichtung, wobei jeweils wieder bereits gewonnene Permeatanteile über die jeweilige Durchgangsdurchbrechung 42 in das Innere der Packung gelangen. Am Ende der mäanderförmigen Strömungskanäle K1 K2 fließt das übriggebliebene Konzentrat durch die Auslaßdurchgangsöffnung 14b aus der erfindungsgemäßen Vorrichtung ab.

In den Fig. 8 und 9 ist eine Alternative Ausführungsform für eine Trägerplatte 40 dargestellt. Hierbei werden für gleiche Bauteile gleiche Bezugszeichen, jeweils um Einhundert erhöht, verwendet.

Die in den Fig. 8 und 9 wiedergegebene Trägerplatte 140 weist stromabwärts der Mitte der elyptischen Durchgangsdurchbrechung 142 eine Erhebung 160 auf. Diese Erhebung 160 dient zur Konstanthaltung des Querschnittes stromabwärts der Mitte der elyptischen Durchgangsdurchbrechung 142. Die Erhebung 160 weist, wie dies insbesondere aus Fig. 9 hervorgeht, eine Rampe 160a, einen sich daran anschließenden horizontalen Abschnitt 160b sowie eine kürzere Rampe 160c auf. Die längere Rampe 160a sowie die kürzere Rampe 160c erheben sich aus der Plattenebene 140 und führen wieder zu dieser zurück.

Weiterhin ist die Erhebung 160 zweigeteilt und bildet zusammen mit der elyptischen Durchgangsdurchbrechung 142 beidseits der elyptischen Durchgangsdurchbrechung 142 zwei Strömungskanäle 162 aus, die sich zu einem gemeinsamen Strömungskanal 164 hinter der elyptischen Durchgangsdurchbrechung 142 verbinden.

## Patentansprüche

1. Vorrichtung zum Filtern und Trennen von Strömungsmedien durch Umkehrosmose und Ultrafiltration, enthaltend ein Gehäuse (10) mit wenigstens einem Zulauf (14a) für das zu filternde bzw. zu trennende Strömungsmedium sowie mindestens je einen Ablauf (14b, 20a) für das Permeat und das Konzentrat, und eine Filtereinrichtung (30),
**dadurch gekennzeichnet**, daß die Filtereinrichtung ein einziges, in dem Gehäuse (10) angeordnetes, flächiges Filterelement (30) ist, welches unter Ausbildung mindestens eines mäanderförmig verlaufenden Strömungskanals (K1 oder K2) für das zu filternde bzw. zu trennende Strömungsmedium mäanderförmig in dem Gehäuse (10) angeordnet ist.

2. Vorrichtung nach Anspruch 1,
**dadurch gekennzeichnet**, daß zwei Strömungskanäle (K1, K2) an beiden Flächenseiten des Filterelements (30) ausgebildet sind.

3. Vorrichtung nach Anspruch 1 oder 2,
**dadurch gekennzeichnet,** daß das Filterelement (30) im wesentlichen senkrecht zur Längsachse des Gehäuses (10) mit zumindest annähernd parallel zueinander verlaufenden Elementflächen in dem Gehäuse (10) angeordnet ist.

4. Vorrichtung nach einem der Ansprüche 1 bis 3,
**dadurch gekennzeichnet,** daß zum Halten des Filterelements (30) im Gehäuse (10) mehrere im wesentlichen parallel zueinander verlaufende, einen Abstand zwischen sich ausbildende Trägerplatten (40; 140) vorgesehen sind, und daß eine Endkante (54) einer Trägerplatte (40; 140) mit einer Umlenkeinrichtung (56) für das mäanderförmig angeordnete Filterelement (30) versehen ist.

5. Vorrichtung nach Anspruch 4,
**dadurch gekennzeichnet**, daß die Umlenkeinrichtung (56) einen gegenüber der Dicke der Trägerplatte (40; 140) großen Umlenkradius für das mäanderförmig angeordnete, flächige Filterelement (30) definiert.

6. Vorrichtung nach Anspruch 4 oder 5,
**dadurch gekennzeichnet,** daß die Umlenkeinrichtung (56) des mäanderförmig angeordneten, flächigen Filterelements (30) durch wenigstens einen an der Endkante (54) vorgesehenen, über die Plattenfläche überstehenden Umlenkkörper (56) gebildet ist.

7. Vorrichtung nach Anspruch 6,
**dadurch gekennzeichnet**, daß entlang der Endkante (54) mehrere in gleichmäßigem Abstand angeordnete Umlenkkörper (56) vorgesehen sind.

8. Vorrichtung nach einem der Ansprüche 1 bis 7,
**dadurch gekennzeichnet**, daß zum Halten des mäanderförmig angeordneten, flächigen Filterelements (30) im Gehäuse (10) mehrere, im wesentlichen parallel zueinander verlaufende sowie einen Abstand zwischen sich ausbildende Trägerplatten (40; 140) vorgesehen sind, die in ihrer Mitte mit einer im wesentlichen senkrecht zur Plattenebene verlaufende, den Permeatabfluß dienenden Durchbrechung (42; 142) versehen sind, und daß die Durchbrechung (42; 142) einen, in der Plattenebene betrachtet, elypsenförmigen Querschnitt aufweist.

9. Vorrichtung nach Anspruch 8,
**dadurch gekennzeichnet**, daß die Durchbrechung (42; 142) von einem im wesentlichen senkrecht zur Plattenebene verlaufenden Spannbolzen (74) einer Spanneinrichtung (70) durchsetzt wird, und daß die Durchbrechung (42, 142) einen Führungsring (46) für den Spannbolzen (74) aufweist, dessen Innendurchmesser dem Innendurchmesser der elyptischen Durchbrechung (42; 142) entlang der kürzeren Hauptachse der Elypse annähernd entspricht.

10. Vorrichtung nach Anspruch 8 oder 9,
**dadurch gekennzeichnet,** daß die elyptische Durchbrechung (42; 142) zumindest an einer der beiden Flächenseiten der Trägerplatte (40; 140) einen über die jeweilige Plattenebene überstehenden, die elyptische Durchbrechung (42; 142) vollständig umgebenden Rand (42a) aufweist.

11. Vorrichtung nach einem der Ansprüche 8 bis 10,
**dadurch gekennzeichnet,** daß die elyptische Durchbrechung (42; 142) in der Trägerplatte (40; 140) so angeordnet ist, daß ihre längere Hauptachse annähernd parallel zu der Strömungsrichtung (S) des zu filternden und zu trennenden Strömungsmediums verläuft.

12. Vorrichtung nach einem der Ansprüche 8 bis 11,
**dadurch gekennzeichnet,** daß die elyptische Durchbrechung (42; 142) mit einer um die Durchbrechung (42; 142) umlaufenden Nut zur Aufnahme eines Dichtelements versehen ist.

13. Vorrichtung nach einem der Ansprüche 4 bis 12,
**dadurch gekennzeichnet,** daß die Endkante (50), die der die Umlenkeinrichtung (56) aufweisenden Endkante (54) gegenüberliegt, eine Abstandseinrichtung (50a, 50b) aufweist, welche über die Ebenen der beiden Flächenseiten der Trägerplatte (40; 140) übersteht.

14. Vorrichtung nach Anspruch 13,
**dadurch gekennzeichnet,** daß die Abstandseinrichtung (50a, 50b) durch einen über die jeweilige Plattenebene der beiden Flächenseiten überstehenden Steg gebildet ist.

15. Vorrichtung nach Anspruch 13 oder 14,
**dadurch gekennzeichnet,** daß der an einer Flächenseite überstehende Abschnitt der Abstandseinrichtung (50a, 50b) eine erste Justiereinrichtung (50a) und der an der anderen Flächenseite überstehende Abschnitt der Abstandseinrichtung (50a, 50b) eine zweite Justiereinrichtung (50b) aufweist, welche so ausgebildet ist, daß eine vorausgehende Trägerplatte (40; 140) mit ihrer zweiten Justiereinrichtung (50b) an der ersten Justiereinrichtung (50a) gegebenenfalls unter Zwischenschaltung eines Dichtelementes einer übernächsten Trägerplatte (40; 140) justiert wird.

16. Vorrichtung nach einem der Ansprüche 13 bis 15,
**dadurch gekennzeichnet**, daß die die Umlenkeinrichtung (56) aufweisende Endkante (54) mit der die Abstandseinrichtung (50a, 50b) aufweisenden Endkante (50) verbindenden Endkanten (48, 52) einer Trägerplatte (40; 140) mit einem über die Plattenebenen beider Flächenseiten der Trägerplatte (40; 140) überstehenden Rand versehen sind, dessen Höhe geringer als der der Abstandseinrichtung (50a, 50b) ist.

17. Vorrichtung nach einem der Ansprüche 13 bis 16,
**dadurch gekennzeichnet,** daß die Trägerplatten (40; 140) aufeinander folgend mit in der Plattenebene um 180 ° gedreht angeordneten Endkanten angeordnet sind.

18. Vorrichtung nach einem der Ansprüche 8 bis 17,
**dadurch gekennzeichnet,** daß der zwischen dem Filterelement (30) und einer jeweiligen Trägerplatte (142) ausgebildete Strömungskanal (K1, K2) einen dem Querschnitt in Höhe der Mitte der elyptischen Durchgangsdurchbrechung (142) entsprechenden, konstanten Querschnitt aufweist.

19. Vorrichtung nach Anspruch 18,
**dadurch gekennzeichnet,** daß die Trägerplatte (140) zur Konstanthaltung des Kanalquerschnitts mit einer Erhebung (160) versehen ist.

20. Vorrichtung nach Anspruch 19,
**dadurch gekennzeichnet,** daß die Erhebung (160) ab Mitte der elyptischen Durchbrechung (142) ansteigt und kurz vor Erreichung der Endkante auf die Ausgangshöhe zurückfällt.

21. Vorrichtung nach Anspruch 19 oder 20,
**dadurch gekennzeichnet,** daß die Erhebung (160) entlang der elyptischen Durchbrechung (142) sowie in Verlängerung der längeren Hauptachse der elyptischen Durchbrechung (142) einen Kanal (164) aufweist.

22. Vorrichtung nach Anspruch 21,
**dadurch gekennzeichnet,** daß der Kanalgrund in Höhe der Plattenebene vor der Erhebung (160) liegt.

23. Vorrichtung nach Anspruch 18,
**dadurch gekennzeichnet,** daß die Trägerplatte (140) zur Konstanthaltung des Kanalquerschnitts eine Absenkung aufweist.

24. Vorrichtung nach Anspruch 18,
**dadurch gekennzeichnet,** daß die Trägerplatte (140) vor der Mitte der elyptischen Durchgangsdurchbrechung (142) abgesenkt ist.

25. Vorrichtung nach einem der Ansprüche 1 bis 24,
**dadurch gekennzeichnet,** daß das Filterelement ein Membrankissen (30) ist.

26. Vorrichtung nach Anspruch 25,
**dadurch gekennzeichnet,** daß das Membrankissen eine verschweißte, doppelte Membran ist.

27. Vorrichtung nach einem der Ansprüche 4 bis 26,
**dadurch gekennzeichnet,** daß die Trägerplatte (40; 140) an einer oder beiden Flächenseiten mit aus der jeweiligen Plattenebene vorstehenden Turbulatoren (58) versehen ist.

28. Vorrichtung nach Anspruch 27,
**dadurch gekennzeichnet,** daß die Turbulatoren (58) in Spalten und Reihen angeordnet sind, wobei sie in aufeinander folgenden Spalten und Reihen versetzt zueinander angeordnet sind.

29. Vorrichtung nach Anspruch 27 oder 28,
**dadurch gekennzeichnet,** daß die Turbulatoren (58) im wesentlichen elypsenförmig sind.

30. Vorrichtung nach einem der Ansprüche 1 bis 29,
**dadurch gekennzeichnet,** daß die Trägerplatte (40; 140) rechteckförmig ist.

31. Vorrichtung nach einem der Ansprüche 1 bis 30,
**dadurch gekennzeichnet,** daß die Breite der Trägerplatte (40; 140) der Breite einer Bahn eines Filterelements (30) angepaßt ist.

## Claims

1. A device for filtering and separating flow media by reverse osmosis and ultrafiltration, containing a housing (10) with at least one inlet (14a) for the flow medium to be filtered or separated and at least one outlet (14b, 20a) respectively for the permeate and the concentrate, and a filter device (30), characterised in that the filter device, which is disposed in the housing (10), is a single flat filter element (30) and is disposed in the housing (10) in a meandering manner to form at least one meandering flow channel (K1 or K2) for the flow medium to be filtered or separated.

2. A device according to Claim 1, characterised in that two flow channels (K1, K2) are formed on both flat sides of the filter element (30).

3. A device according to Claim 1 or 2, characterised in that the filter element (30) is disposed in the housing (10) substantially perpendicularly with respect to the longitudinal axis of the housing (10), with element faces running at least approximately parallel to one another.

4. A device according to one of Claims 1 to 3, characterised in that to hold the filter element (30) in the housing (10) a plurality of carrier plates (40; 140) running substantially parallel to one another and forming a spacing between one another are provided, and in that one end edge (54) of a carrier plate (40; 140) is provided with a deflector means (56) for the meandering filter element (30).

5. A device according to Claim 4, characterised in that the deflector means (56) defines a radius of deflection, which is large in relation to the thickness of the carrier plate (40; 140), for the meandering flat filter element (30).

6. A device according to Claim 4 or 5, characterised in that the deflector means (56) of the meandering flat filter element (30) is formed by at least one deflector body (56) provided on the end edge (54) and projecting beyond the plate face.

7. A device according to Claim 6, characterised in that a plurality of deflector bodies (56) are provided along the end edge (54) and are disposed at equal spacing.

8. A device according to one of Claims 1 to 7, characterised in that to hold the meandering flat filter element (30) in the housing (10) a plurality of carrier plates (40; 140) running substantially parallel to one another and forming a spacing between one another are provided, and these are provided in their centre with an aperture (42; 142) running substantially perpendicularly with respect to the plane of the plate and serving to allow the permeate to flow out, and in that the aperture (42; 142) has a cross-section which, as seen in the plane of the plate, is elliptical.

9. A device according to Claim 8, characterised in that the aperture (42; 142) is traversed by a tensioning bolt (74) of a tensioning means (70), this tensioning bolt (74) running substantially perpendicularly with respect to the plane of the plate, and in that the aperture (42, 142) has a guide ring (46) for the tensioning bolt (74), whereof the internal diameter corresponds approximately to the internal diameter of the elliptical aperture (42; 142) along the shorter main axis of the ellipse.

10. A device according to Claim 8 or 9, characterised in that the elliptical aperture (42; 142) has at least on one of the two flat sides of the carrier plate (40: 140) a rim (42a) which projects beyond the respective plate plane and completely surrounds the elliptical aperture (42; 142).

11. A device according to one of Claims 8 to 10, characterised in that the elliptical aperture (42; 142) in the carrier plate (40; 140) is disposed such that its longer main axis runs approximately parallel to the direction of flow (S) of the flow medium to be filtered and separated.

12. A device according to one of Claims 8 to 11, characterised in that the elliptical aperture (42; 142) is provided with a groove peripheral with respect to the aperture (42: 142) for receiving a sealing element.

13. A device according to one of Claims 4 to 12, characterised in that the end edge (50) lying opposite the end edge (54) having the deflector means (56) has a spacing means (50a, 50b) which projects beyond the planes of the two flat sides of the carrier plate (40; 140).

14. A device according to Claim 13, characterised in that the spacing means (50a, 50b) is formed by a web projecting beyond the respective plate plane of the two flat sides.

15. A device according to Claim 13 or 14, characterised in that the portion of the spacing means (50a, 50b) projecting from one flat side has a first adjusting means (50a) and the portion of the spacing means (50a, 50b) projecting from the other flat side has a second adjusting means (50b) which is formed such that a leading carrier plate (40; 140) is adjusted with its second adjusting means (50b) against the first adjusting means (50a), where appropriate with interposition of a sealing element, of a next but one carrier plate (40; 140).

16. A device according to one of Claims 13 to 15, characterised in that those end edges (48, 52) of a carrier plate (40; 140) connecting the end edge (54) having the deflector means (56) to the end edge (50) having the spacing means (50a, 50b) are provided with a rim projecting beyond the plate planes of both flat sides of the carrier plate (40; 140), the height of this rim being less than that of the spacing means (50a, 50b).

17. A device according to one of Claims 13 to 16, characterised in that the carrier plates (40; 140) are arranged successively with end edges disposed turned through 180° in the plane of the plate.

18. A device according to one of Claims 8 to 17, characterised in that the flow channel (K1, K2) formed between the filter element (30) and a respective carrier plate (142) has a constant cross-section corresponding to the cross-section at the level of the centre of the elliptical through aperture (142).

19. A device according to Claim 18, characterised in that the carrier plate (140) is provided with a raised portion (160) to keep the channel cross-section constant.

20. A device according to Claim 19, characterised in that the raised portion (160) rises from the centre of the elliptical aperture (142) and falls back to the initial level just before reaching the end edge.

21. A device according to Claim 19 or 20, characterised in that the raised portion (160) has a channel (164) along the elliptical aperture (142) and as an extension to the longer main axis of the elliptical aperture (142).

22. A device according to Claim 21, characterised in that in front of the raised portion (160) the base of the channel lies at the level of the plane of the plate.

23. A device according to Claim 18, characterised in that the carrier plate (140) has a lowered portion to keep the channel cross-section constant.

24. A device according to Claim 18, characterised in that the carrier plate (140) is lowered in front of the centre of the elliptical through aperture (142).

25. A device according to one of Claims 1 to 24, characterised in that the filter element is a membrane cushion (30).

26. A device according to Claim 25, characterised in that the membrane cushion is a welded double membrane.

27. A device according to one of Claims 4 to 26, characterised in that the carrier plate (40; 140) is provided on one or both flat sides with turbulators (58) projecting out of the respective plane of the plate.

28. A device according to Claim 27, characterised in that the turbulators (58) are disposed in columns and rows, being disposed offset from one another in successive columns and rows.

29. A device according to Claim 27 or 28, characterised in that the turbulators (58) are substantially elliptical.

30. A device according to one of Claims 1 to 29, characterised in that the carrier plate (40; 140) is rectangular.

31. A device according to one of Claims 1 to 30, characterised in that the width of the carrier plate (40, 140) is matched to the width of a track of a filter element (30).

## Revendications

1. Dispositif pour filtrer et séparer des milieux en écoulement par osmose inverse et ultrafiltration, comportant un carter (10) avec au moins une conduite d'arrivée (14a) pour le milieu en écoulement à filtrer ou à séparer et au moins une conduite d'évacuation (14b, 20a) pour le perméat et le concentré, ainsi qu'un dispositif de filtrage (30), caractérisé en ce que le dispositif de filtrage est un seul élément de filtrage (30) plat placé dans le carter (10), ledit élément de filtrage étant disposé en forme de méandres dans le carter (10) en formant au moins un canal d'écoulement (K1 ou K2) en forme de méandres et destiné au milieu en écoulement à filtrer ou à séparer.

2. Dispositif selon la revendication 1, caractérisé en ce que deux canaux d'écoulement (K1, K2) sont réalisés sur les deux côtés plans de l'élément de filtrage (30).

3. Dispositif selon la revendication 1 ou 2, caractérisé en ce que l'élément de filtrage (30) est disposé essentiellement perpendiculairement à l'axe longitudinal du carter (10) avec des surfaces d'élément au moins approximativement parallèles l'une à l'autre dans le carter 10.

4. Dispositif selon l'une des revendications 1 à 3, caractérisé en ce que, pour le maintien de l'élément de filtrage (30) dans le carter (10), il est prévu plusieurs plaques de support (40 ; 140) essentiellement parallèles l'une à l'autre et disposées à une certaine distance l'une de l'autre et en ce qu'une arête d'extrémité (54) d'une plaque de support (40 ; 140) est munie d'un dispositif de déviation (56) pour l'élément de filtrage (30) disposé en forme de méandres.

5. Dispositif selon la revendication 4, caractérisé en ce que le dispositif de déviation (56) définit un rayon de déviation qui est grand par rapport à l'épaisseur de la plaque de support (40 ; 140) et qui est prévu pour l'élément de filtrage (30) plat disposé en forme de méandres,

6. Dispositif selon la revendication 4 ou 5, caractérisé en ce que le dispositif de déviation (56) de l'élément de filtrage (30) plat et disposé en forme de méandres est constitué d'au moins un corps de déviation (56) prévu sur l'arête d'extrémité (54) et dépassant de la surface de la plaque.

7. Dispositif selon la revendication 6, caractérisé en ce que plusieurs corps de déviation (56) disposés à distance régulière sont prévus le long de l'arête d'extrémité (54).

8. Dispositif selon l'une des revendications 1 à 7, caractérisé en ce que, pour le maintien dans le carter (10), de l'élément de filtrage (30) plat disposé en forme de méandres, il est prévu plusieurs plaques de support (40 ; 140) qui sont essentiellement parallèles l'une à l'autre, sont disposées à une certaine distance l'une de l'autre et sont munies au centre d'une ouverture (42 ; 142) essentiellement perpendiculaire au plan de la plaque et servant à l'écoulement du perméat et en ce que l'ouverture (42 ; 142) présente une section transversale elliptique considérée dans le plan de la plaque.

9. Dispositif selon la revendication 8, caractérisé en ce que l'ouverture (42 ; 142) est traversée par une goupille de serrage (74) d'un dispositif de serrage (70) passant essentiellement perpendiculairement par rapport au plan de la plaque et en ce que l'ouverture (42 ; 142) présente un anneau de guidage (46) pour la goupille de serrage (74) dont le diamètre intérieur correspond approximativement au diamètre intérieur de l'ouverture (42 ; 142) elliptique le long de l'axe principal le plus court de l'ellipse.

10. Dispositif selon la revendication 8 ou 9, caractérisé en ce que l'ouverture (42 ; 142) elliptique présente, au moins sur l'un des deux côtés plans de la plaque de support (40 ; 140), un bord (42a) dépassant du plan respectif de la plaque et entourant complètement l'ouverture elliptique (42 ; 142).

11. Dispositif selon l'une des revendications 8 à 10, caractérisé en ce que l'ouverture elliptique (42 ; 142) est disposée dans la plaque de support (40 ; 140) de telle sorte que son axe principal le plus long est approximativement parallèle au sens d'écoulement (S) du milieu en écoulement à filtrer et à séparer.

12. Dispositif selon l'une des revendications 8 à 11, caractérisé en ce que l'ouverture (42 ; 142) elliptique est munie d'une rainure faisant le tour de l'ouverture (42 ; 142) et destinée au logement d'un élément d'étanchéité.

13. Dispositif selon l'une des revendications 4 à 12, caractérisé en ce que l'arête d'extrémité (50) qui est opposée à l'arête d'extrémité (54) présentant le dispositif de déviation (56), présente un dispositif d'écartement (50a, 50b) qui dépasse les plans des deux côtés plans de la plaque de support (40 ; 140).

14. Dispositif selon la revendication 13, caractérisé en ce que le dispositif d'écartement (50a, 50b) est formé par une nervure dépassant du plan respectif des deux côtés plans de la plaque.

15. Dispositif selon la revendication 13 ou 14, caractérisé en ce que le segment du dispositif d'écartement (50a, 50b) dépassant d'un côté plan présente un premier dispositif d'ajustement (50a) et le segment du dispositif d'écartement (50a, 50b) dépassant de l'autre côté plan, un second dispositif d'ajustement (50b) qui est réalisé de telle sorte qu'une plaque de support (40 ; 140) antérieure est ajustée par son second dispositif d'ajustement (50b) au premier dispositif d'ajustement (50a), le cas échéant en intercalant un élément d'étanchéité d'une plaque de support (40 ; 140) suivante.

16. Dispositif selon l'une des revendications 13 à 15, caractérisé en ce que les arêtes d'extrémité (48, 52) d'une plaque de support (40 ; 140) assemblant l'arête d'extrémité (54) présentant le dispositif de déviation (56) avec l'arête d'extrémité (50) présentant le dispositif d'écartement (50a, 50b) sont munies d'un bord qui dépasse des plans des deux côtés plans de la plaque de support (40 ; 140) et dont la hauteur est plus réduite que celle du dispositif d'écartement (50a, 50b).

17. Dispositif selon l'une des revendications 13 à 16, caractérisé en ce que les plaques de support (40 ; 140) sont disposées successivement l'une sur l'autre avec les arêtes d'extrémité disposées dans le plan de la plaque et pivotées de 180 °.

18. Dispositif selon l'une des revendications 8 à 17, caractérisé en ce que le canal d'écoulement (K1, K2) réalisé entre l'élément de filtrage (30) et une plaque de support (142) respective présente une section transversale constante correspondant à la section transversale à la hauteur du milieu de l'ouverture de passage (142) elliptique.

19. Dispositif selon la revendication 18, caractérisé en ce que, pour le maintien constant de la section transversale du canal, la plaque de support (140) est munie d'un élément formant saillie (150).

20. Dispositif selon la revendication 19, caractérisé en ce que l'élément formant saillie (160) augmente à partir du milieu de l'ouverture (142) elliptique et rediminue à la hauteur initiale juste avant d'atteindre l'arête d'extrémité.

21. Dispositif selon la revendication 19 ou 20, caractérisé en ce que l'élément formant saillie (160) présente un canal (164) le long de l'ouverture elliptique (142) et dans le prolongement de l'axe principal le plus long de l'ouverture elliptique (142).

22. Dispositif selon la revendication 21, caractérisé en ce que le fond du canal se situe à la hauteur du plan de la plaque avant l'élément formant saillie (160).

23. Dispositif selon la revendication 18, caractérisé en ce que la plaque de support (140) présente un affaissement pour le maintien constant de la section transversale du canal.

24. Dispositif selon la revendication 18, caractérisé en ce que la plaque de support (140) est affaissée avant le milieu de l'ouverture de passage (142) elliptique.

25. Dispositif selon l'une des revendications 1 à 24, caractérisé en ce que l'élément de filtrage est un coussin à membrane (30).

26. Dispositif selon la revendication 25, caractérisé en ce que le coussin à membrane est une double membrane soudée.

27. , Dispositif selon l'une des revendications 4 à 26, caractérisé en ce que la plaque de support (40 ; 140) est munie, sur l'un des côtés ou les deux côtés plans, de turbulateurs (58) dépassant du plan respectif de la plaque.

28. Dispositif selon la revendication 27, caractérisé en ce que les turbulateurs (58) sont disposés en colonnes et rangées, et en ce qu'ils sont décalés l'un par rapport à l'autre en colonnes et rangées successives.

29. Dispositif selon la revendication 27 ou 28, caractérisé en ce que les turbulateurs (58) sont essentiellement elliptiques.

30. Dispositif selon l'une des revendications 1 à 29, caractérisé en ce que la plaque de support (40 ; 140) est rectangulaire.

31. Dispositif selon l'une des revendications 1 à 30, caractérisé en ce que la largeur de la plaque de support (40 ; 140) est adaptée à la largeur d'une bande d'un élément de filtrage (30).
